# EUROPEAN PATENT APPLICATION

(11) **EP 1 398 102 A1**
(43) Date of publication of application: **17.03.2004**
(21) Application number: 03090291.0
(22) Date of filing: 09.09.2003
(51) Int. Cl.: B23B 31/30, F16D 1/08

(54) **Hydraulic clamp bushings**

(30) Priority: 11.09.2002 JP 2002265618
(71) Applicant: KANEFUSA KABUSHIKI KAISHA, Niwa-gun, Aichi 480-0192 (JP)
(72) Inventor: Umeda, Tadashi c/o Kanefusa Kabushiki Kaisha, Niwa-gun Aichi 480-0192 (JP); Ide, Tsuyoshi c/o Kanefusa Kabushiki Kaisha, Niwa-gun Aichi 480-0192 (JP)
(74) Representative: Baumgärtel, Gunnar, Dr.

(57) **Abstract**

A hydraulic clamp bushing (10) includes a collar (20) and cylindrical sleeve (30) extending from the collar. A hydraulic chamber (36) is defined in the sleeve, so that an outer periphery (30a) of the sleeve can expand to define an effective expandable region (A1) along the outer periphery. An expandable amount of the effective expandable region is greater than a tolerable gap defined by an outer diameter of the sleeve and an inner diameter of an axial bore of a rotary tool (40) that receives the sleeve of the bushing. A recess (26) is defined in the collar along the outer periphery of the sleeve, so that a range of the effective expandable region can be determined in response to a depth (M) of the recess in an axial direction of the sleeve.

## Description

This application claims priority to Japanese patent application serial number 2002-265618, the contents of which are incorporated herein by reference.

The present invention relates to hydraulic clamp bushings that are adapted to fix rotary tools in position relative to spindles of machines, e.g., woodworking machines.

There have been increasing demands for techniques that can improve accuracy of rotary tools with regard to radial run-out and lateral run-out during working operations by the rotary tools that are mounted to spindles of woodworking machines. To this end, for example, WO98/46896 has proposed to provide higher accuracy of a rotary tool with regard to radial run-out and lateral run-out by incorporating a hydraulic clamp bushing that is interposed between the rotary tool and a spindle of a working machine. The hydraulic clamp bushing disclosed in this publication includes a collar, a cylindrical sleeve extending from the collar, and a hydraulic chamber defined within the sleeve. The sleeve is inserted into an axial bore defined in the rotary tool and a predetermined hydraulic pressure is then applied to the hydraulic chamber. As a result, the sleeve may deform in a direction radially outward of the sleeve to increase its outer diameter, so that the rotary tool can clamped against the sleeve while the rotary tool is centered relative to the sleeve.

However, the hydraulic clamp bushing of the publication constructed as described above has a limitation in the amount of possible deformation of the sleeve in a region adjacent to a boundary between the collar and the sleeve. Thus, even if the pressure of the hydraulic fluid within the hydraulic chamber has been increased, the outer diameter of the sleeve may not effectively expand to such an amount that can compensate for a tolerable gap defined by an outer diameter of the sleeve and an inner diameter of the axial bore of the rotary tool. Here, the tolerable gap may correspond to the sum of the tolerance of the outer diameter of the sleeve and the tolerance of the diameter of the axial bore. Therefore, it was very difficult to center and clamp a rotary tool having a relatively small thickness against the sleeve of the hydraulic clamp bushing of the publication with the rotary tool pressed against the collar.

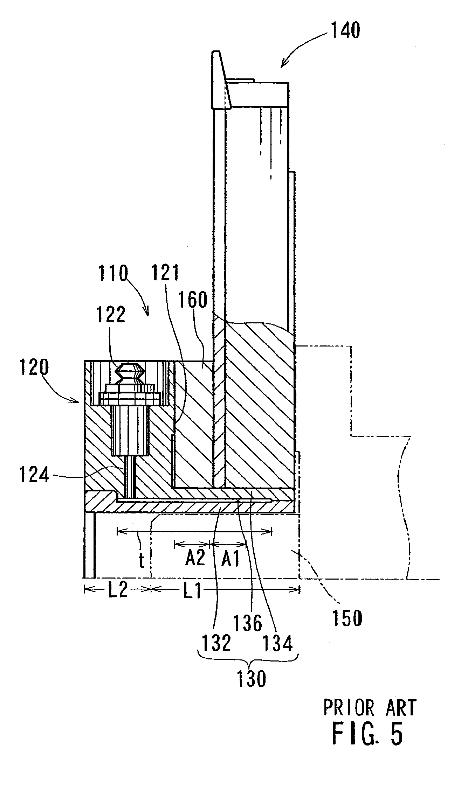

In order to cope with demands for rotary tools having a relatively small thickness, for example, a hydraulic clamp bushing 110 shown in FIG. 5 has been proposed, which bushing has a relatively long length. The hydraulic clamp bushing 110 shown in FIG. 5 is adapted to interconnect a spindle 150 (having a length L1) and a rotary tool 140 and includes a collar 120 and a cylindrical sleeve 130 that extends from the collar 120. The sleeve 130 includes an inner sleeve 132 and an outer sleeve 134 that define a hydraulic chamber 136 therebetween. A hydraulic medium, e.g., grease, may be injected or charged into the hydraulic chamber 136 via a nozzle 122, so that the pressure within the hydraulic chamber 136 is increased. As a result, a region of the outer sleeve 134 indicated by an expandable width t may deform in a direction radially outward, so that the outer diameter of the sleeve 130 may increase or expand. Here, a region A2 of the sleeve 130 adjacent to a boundary between the collar 120 and the sleeve 130 may not effectively expand. Therefore, a liner 160 that has a thickness substantially corresponding to the length of the region A2 is inserted between the collar 120 and the rotary tool 140, so that the rotary tool 140 can be clamped even if the rotary tool 140 has a relatively small thickness. Thus, in this design, by incorporating the liner 160, the position of the rotary tool 140 is shifted from the region A2 to a region A1, where the sleeve 130 can effectively expand, so that the rotary tool 140 can be clamped against the sleeve 130 while the rotary tool 140 is centered relative to the sleeve 130.

Although the incorporation of the liner 160 between the collar 120 and the rotary tool 140 shown in FIG. 5 can be used effectively even for the rotary tool 140 having a relatively small thickness, there is a limit in reduction of a thickness of the assembly of the rotary tool 140 and the bushing 110 (hereinafter called "set thickness"). The set thickness may be the sum of a length L1 (axial length of the spindle 150) and a length L2 (extension length of the bushing 110 from the front end of the spindle 150). Thus, if the set thickness is increased, the extended length portion may interfere with the other parts of the working machine. On the other hand, if the length of the spindle 150 is relatively small, a problem may be caused that a region of the inner sleeve 132 corresponding to the expandable width t may not oppose to the spindle 150 in some occasions. Nevertheless, if the length of the sleeve 130 is reduced to minimize the set thickness, the effective expandable region A1 may be reduced. In such a case, it is not possible to apply an effective clamping force to the rotary tool 140 and to achieve the intended purpose for clamping the rotary tool 140 against the sleeve 130 while the rotary tool 140 is centered relative to the sleeve 130. Therefore, the known bushing 110 that utilizes the liner 160 has a limit for effectively clamping the rotary tool 140 with the set thickness being determined within a limited range.

It is, accordingly, an object of the present invention to provide improved techniques for effectively clamping a rotary tool against a cylindrical sleeve, which defines a hydraulic chamber and extends from a collar, of a hydraulic clamp bushing while a set thickness is within a limited range.

The inventors of the present application have devoted themselves to studying the construction of hydraulic clamp bushings of types described above in order to seek techniques for enabling the rotary tool 140 to be effectively clamped even if the set thickness is relatively small. As a result, the inventors have succeeded to find that the rotary tool 140 can be effectively clamped against the sleeve 130 while the set thickness is within a limited range, by providing a recess in the collar 120 along the outer periphery of the sleeve 130 in order to shift or extend the range of the effective expandable region A1 toward the region A2 adjacent to the boundary between the collar and the sleeve.

Generally speaking, according to the present invention, hydraulic clamp bushings are taught that have a collar with a recess disposed along an outer periphery of a sleeve, so that a range of the effective expandable region can be determined in response to the depth of the recess. Therefore, a rotary tool can be reliably clamped against the sleeve and can be centered relative to the sleeve while a set thickness is within a limited range. The recess has a close relationship with the formation of an effective expansion region that enables expansion of an outer periphery of the sleeve by an amount that is greater than a tolerable gap defined by the outer diameter of the sleeve and an inner diameter of an axial bore of the rotary tool. The recess according to this teaching is entirely different in a technical idea from an abrasion relieving recess that may be formed in a region adjacent to a boundary between the sleeve and the collar and that does not have substantial relationship with the formation of the effective expandable region.

According to one aspect of the present teachings, hydraulic clamp bushings are taught that comprise a collar, a sleeve, a hydraulic chamber and a recess. The sleeve has a cylindrical configuration and extends from the collar. The hydraulic chamber is defined in the sleeve. A hydraulic medium, e.g., grease, may be injected or charged into the hydraulic chamber in order to pressurize the hydraulic chamber to a predetermined pressure (hydraulic pressure). As the pressure within the hydraulic chamber increases, the outer periphery of the sleeve may substantially uniformly deform outward in a radial direction, so that the outer periphery of the sleeve may coaxially expand. The amount of expansion of the sleeve may be varied or controlled in response to a set pressure of the hydraulic chamber. A rotary tool may be clamped against the sleeve by an effective expansion region of the sleeve, the outer periphery of which is expandable coaxially by an amount that is greater than a first tolerable gap between the outer diameter of the sleeve and an inner diameter of an axial bore of the rotary tool. Here, the term "first tolerable gap" is used to mean the sum of the tolerance of the outer diameter of the sleeve and the tolerance of the inner diameter of the axial bore of the rotary tool. The rotary tool may have a saw, a breaking blade, a cutting blade, or any other kind of sews and blades having axial bores.

Because the recess is formed in the collar along the outer periphery of the sleeve, the range of the effective expanding region defined on the outer peripheral surface of the sleeve can be shifted or extended as the depth of the recess in the axial direction of the sleeve is varied. More specifically, by providing the recess, it is possible to shift or extend the effective expanding region toward the collar than the same region determined in the arrangement where no recess is provided. In addition, by changing the depth of the recess, the effective expanding region can be set to be optimum to the thickness or any other parameters of the rotary tool that is to be clamped. By shifting or extending the effective expanding region toward the collar, a force for centering and clamping the rotary tool against the sleeve can be ensured even if the distance between the collar and the rotary tool is relatively short. Thus, the hydraulic clamp bushing according to the present teaching enables the effective expanding region to be shifted or extended in response to the position or the thickness of the rotary tool. Therefore, the set thickness can be minimized in comparison with the conventional arrangement where the position of the rotary tool is changed in response to the range of the effective expanding region. By minimizing the set thickness, it is possible to avoid or minimize the interference of portions of the assembly corresponding to the extension length of the sleeve with the other parts of a working machine or a machine tool. Further, because no liner is used, the axial length of the sleeve can be reduced, so that the entire hydraulic clamp bushing may have a compact construction and may be light-weight.

As described above, the hydraulic clamp bushing according to the present teaching enables the rotary tool to be properly clamped against the sleeve while the set thickness is within a limited range.

In another aspect of the present teachings, the recess is concave with respect to a predetermined reference surface of the collar, so that the effective expandable region extends over a position corresponding to the reference surface.

Preferably, the reference surface extends substantially perpendicular to the outer periphery of the sleeve and the reference surface defines a contact surface with a part of the rotary tool.

Preferably, the recess has a first side extending along the outer periphery of the sleeve and a second side that is inclined relative to the reference surface. For example, the recess has a substantially right angled rectangular configuration in cross section in a radial direction of the sleeve.

In another aspect of the present teachings, the inner periphery of the sleeve may be coaxially contracted when a predetermined pressure is applied to the hydraulic chamber. More specifically, the inner periphery of the sleeve may be contracted by an amount that is greater than a second tolerable gap defined by the inner diameter of the sleeve and an outer diameter of a drive shaft that serves as a drive source of the rotary tool. Here, the term "second tolerable gap" may be the sum of the tolerance of the inner diameter of the sleeve and the tolerance of the outer diameter of the drive shaft. Because the set thickness can be limited by the provision of the recess in the sleeve, the displacement between the expandable width region of the inner periphery of the sleeve and the drive shaft can be prevented or minimized.

Thus, according to this aspect, the inner periphery of the sleeve is clamped or pressed against the drive shaft when the hydraulic fluid having the predetermined pressure is applied to the hydraulic chamber. Therefore, not only the rotary tool but also the drive shaft serving as the drive source can be reliably clamped against the sleeve.

Additional objects, features and advantages of the present invention will be readily understood after reading the following detailed description together with the claims and the accompanying drawings, in which:
FIG. 1 is a perspective view of a representative hydraulic clamp bushing according to the present invention;
FIG. 2 is a sectional view of a part of the representative hydraulic clamp bushing and showing the state where a rotary tool and a machine spindle is interconnected by the bushing;
FIG. 3 is an enlarged view of a part of FIG. 2 and showing the state where no grease pressure is applied to a hydraulic chamber;
FIG. 4 is an enlarged view similar to FIG. 3 but showing the state where a grease pressure is applied to the hydraulic chamber; and
FIG. 5 is a sectional view of a conventional hydraulic clamp bushing and showing the state where a rotary tool and a machine spindle are interconnected by the bushing.

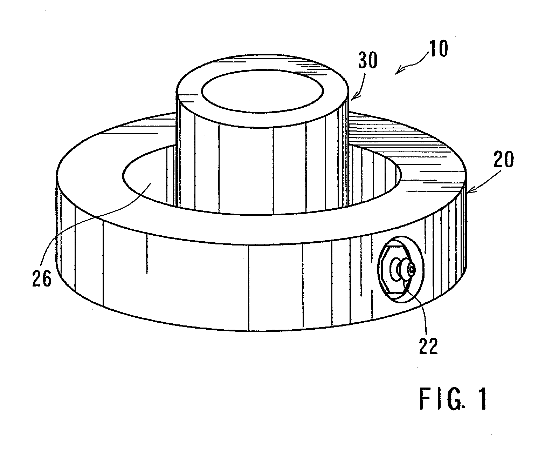

A representative embodiment of the present invention will now be described with reference to FIGS. 1 to 4. A representative hydraulic clamp bushing 10 may be adapted to interconnect a machine spindle 50 of a tenoner and a rotary tool 40. The machine spindle 50 may have a relatively small axial length L1. The rotary tool 40 includes a saw (tipped saw) 42 and a breaking blade 44. The machine spindle 50 serves as a drive shaft that is a drive source of the rotary tool 40.

Referring to FIG. 1, the representative clamp bushing 10 includes a flange-like collar 20 and a cylindrical sleeve 30 that is joined to the collar 20 and extends from the collar 20. An injection nozzle 22 is mounted on an outer periphery of the collar 20, so that grease can be injected to be filled into a hydraulic chamber 36 that will be explained later, via the injection nozzle 22. A discharge hole (not shown) also is provided on the lateral side of the collar 20, so that the grease can be discharged from the hydraulic chamber 36 via the discharge hole. A plurality of bolt insertion holes (not shown) are formed in the collar 20 in positions not to interfere with the nozzle 22 and extend in parallel to the axis of the machine spindle 50. The insertion holes are adapted to receive bolts, so that the hydraulic clamp bushing 10, the rotary tool 40 and a flange (not shown) that is formed integrally with the machine spindle 50 can be fixed together by the bolts. A relief recess 26 is formed in the collar 20 in a position adjacent to a boundary between the collar 20 and the sleeve 30.

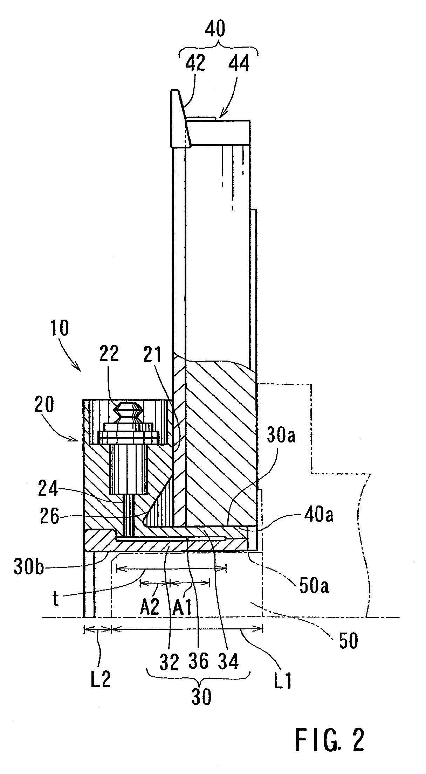

Referring to FIG. 2, the hydraulic clamp bushing 10 is shown in a cross sectional view in a radial direction with a lower half omitted. The sleeve 30 includes an inner sleeve 32 and an outer sleeve 34. The hydraulic chamber 36 is defined as a hollow space formed between the inner sleeve 32 and the outer sleeve 34. The hydraulic chamber 36 communicates with the injection nozzle 22 via a communication hole 24 defined in the collar 20, so that the grease may be filled into the hydraulic chamber 36 via the injection nozzle 22 under pressure by means of a grease gun or like injection tool.

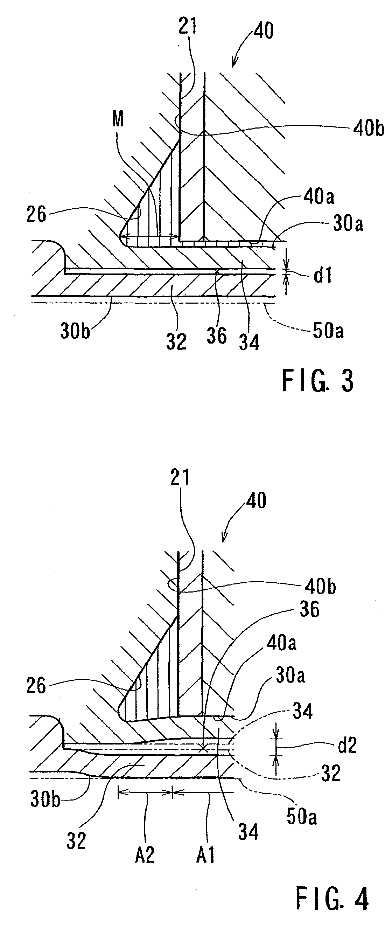

The relief recess 26 is configured as a concave part with respect to a reference surface 21 (that defines a boundary between the collar 20 and the sleeve 30) and is defined along an outer periphery 30a. The relief recess 26 extends over the entire circumferential length of the sleeve 30 and has a depth M in the axial direction of the sleeve 30 (see FIG. 3). As shown in FIGS. 2 and 3, the relief recess 26 has a substantially right-angled triangular configuration in cross section in a radial direction of the sleeve 30 and has a first side and a second side. The first side extends along the outer periphery 30a of the sleeve 30. The second side is inclined relative to the first side and defines a tapered surface.

The operation of the above representative hydraulic clamp bushing 10 will now be described with reference to FIGS. 2 to 4 in connection with the operation for interconnecting the rotary tool 40 and the machine spindle 50 of the tenoner by the bushing 10.

First, the sleeve 30 is fitted at the outer periphery 30a into an axial bore 40a defined in the rotary tool 40 until the reference surface 21 contacts with an end surface 40b of the rotary tool 40. Then, the machine spindle 50 is fitted into the inner periphery 30b of the sleeve 30 defined by the inner wall of the inner sleeve 32. The set thickness of this assembly may be the sum of the length L1 of the machine spindle 50 and an extension length L2 of the sleeve 30 from the front end of the machine spindle 50.

With the rotary tool 40 and the machine spindle 50 of the tenoner set as described above, the grease pressurized by the grease gun may be injected into the hydraulic chamber 36 via the injection nozzle 22. As a result, the configurations of the inner sleeve 32 and the outer sleeve 34 may be changed from the configurations shown in FIG. 3 to the configurations shown in FIG. 4. Thus, due to the hydraulic pressure of the grease, the pressure within the hydraulic chamber 36 may be increased, so that the length in the radial direction of the hydraulic chamber 36 may increase from a length d1 shown in FIG. 3 to a length d2 shown in FIG. 4. As a result, a portion of the outer sleeve 34 corresponding to an expandable width t may deform radially outward, so that the diameter of the sleeve 30 increases. Then, an effective expandable region A1 is defined by the outer periphery 30a of the sleeve 30 in a position opposing to the axial bore 40a. In this effective expandable region A1, the outer diameter of the sleeve 30 may expand by an amount that is greater than a first tolerable gap defined by the outer diameter of the sleeve 30 and the inner diameter of the axial bore 40a. The tolerable gap may have a size corresponding to the sum of the tolerance of the outer diameter of the sleeve 30 and the tolerance of the inner diameter of the axial bore 40a. On the other hand, the amount of expansion at a region A2 of the outer periphery 30a of the sleeve 30 opposing to the relief recess 26 and adjacent to the boundary between the collar 20 and the sleeve 30 is not so great as the expansion amount at the effective expandable region A1. The position or length of the effective expandable region A 1 can be varied by changing the depth M of the relief recess 26. Due to the formation of the effective expandable region A1, the outer periphery 30a of the sleeve 30 may closely contact the inner wall of the axial bore 40a of the rotary tool 40, so that the rotary tool 40 can be clamped against the sleeve 30 while the rotary tool 40 is centered relative to the sleeve 30.

In addition, as the pressure within the hydraulic chamber 36 increases, a portion of the inner sleeve 32 corresponding to the expandable width t may deform radially inward, so that the inner diameter of the sleeve 30 may be reduced. More specifically, the inner periphery 30b of the sleeve 30 may coaxially contract by an amount that is greater than a second tolerable gap defined by the inner diameter of the sleeve 30 and the outer diameter of the machine spindle 50. Here, the second tolerable gap may have a size corresponding to the sum of the tolerance of the inner diameter of the sleeve 30 and the tolerance of the outer diameter of the machine spindle 50. Therefore, the inner periphery 30b of the sleeve 30 may closely contact an outer periphery 50a of the machine spindle 50, so that the machine spindle 50 can be clamped against the sleeve 30 while the machine spindle 50 is centered relative to the sleeve 30. After the rotary tool 40 and the machine spindle 50 have been centered and clamped against the sleeve 30, they are fastened together by bolts.

The operation and effect of the above representative hydraulic clamp bushing 10 will be further explained in connection with Examples 1 and 2 that are practically applied examples of the bushing 10.

### (Example 1)

In this example, the collar 20 of the representative hydraulic bushing 10 has a thickness of 20 mm and the bushing 10 is adapted to interconnect the machine spindle 50 of the tenoner having an axial length of 30 mm and the rotary tool 40 having a thickness of 10 mm. If the same machine spindle 50 and the rotary tool 40 are interconnected by the conventional hydraulic bushing 110 shown in FIG. 5 with the collar 120 having the same thickness as the collar 20 of this example, an effective clamping force may not be applied by the region A2 that is adjacent to the boundary between the collar 120 and the sleeve 130 (within about 10 mm from the boundary). Therefore, the liner 160 having the thickness of about 10 mm must be inserted between the collar 120 and the rotary tool 40. This may result the set thickness of 40 mm. In contract, in case of the representative hydraulic clamp bushing 10, the set thickness of 30 mm may be attained, because the effective expandable region A 1 can be shifted or extended toward the collar 20 by the relief recess 26. In addition, it is not necessary to incorporate a liner. Therefore, for example, it is possible to determine the set thickness to be smaller than the axial length of the machine spindle 50. If the set thickness is greater than the axial length of the machine spindle 50, there exists a possibility that portions of the bushing 10 extending beyond the front end of the machine spindle 50 may interfere with the other parts of the tenoner. The use of the representative hydraulic clamp bushing 10 may dissolve the problem of such interference.

### (Example 2)

In this example, the collar 20 of the representative hydraulic bushing 10 has a standard thickness of 20 mm and the bushing 10 is adapted to interconnect the machine spindle 50 of the tenoner having an axial length of 30 mm and the rotary tool 40 having a thickness of 40 mm. If the same machine spindle 50 and the rotary tool 40 are interconnected by the conventional hydraulic bushing 110 shown in FIG. 5 with the collar 120 having the same thickness as the collar 20 of this example, while the liner 160 having the thickness of 10 mm is used, the set thickness of 48 mm may be resulted. In such a case, the extension length L2 within the expandable width t may be about 18 mm and it is not possible to ensure accuracy with regard to run-out of the saw 42 and the breaking blade 44 of the rotary tool 40. In contrast, in case of the representative hydraulic clamp bushing 10, the set thickness of 38 mm may be attained and the extension length L2 within the expandable width t may be reduced to about 8 mm. Therefore, it is possible to ensure accuracy with regard to run-out of the saw 42 and the breaking blade 44 of the rotary tool 40.

As described above, according to the representative hydraulic clamp bushing 10, because the relief recess 26 is defined in the collar 20 along the outer periphery 30a of the sleeve 30, the effective expandable region A 1 may be shifted or extended in a direction toward the collar 20 in comparison with the arrangement where no relief recess is provided. In addition, the rotary tool 40 can be fitted onto the sleeve 30 while a limited set thickness is ensured. Further, the relief recess 26 has a substantially right angled triangular configuration in cross section, and the relief recess 26 having such a configuration can be easily formed by an appropriate machining operation among various configurations that can provide the same operation and effect as the substantially right angled triangular configuration.

Furthermore, the representative hydraulic clamp bushing 10 can be also used for appropriately clamping the machine spindle 50 (that serves as a drive source of the rotary tool 40) against the sleeve 30. In particular, because the set thickness of the assembly of the rotary tool 40 and the bushing 10 can be limited, it is possible to prevent portions of the bushing 10 extending beyond the machine spindle 50 from interference with the other parts of the tenoner. Further, even if the axial length of the machine spindle 50 is relatively short as is often the case with the tenoners, it is possible to prevent or minimize the displacement of the portion of the inner sleeve 32 corresponding to the expandable width t from the machine spindle 50.

Moreover, according to the representative hydraulic clamp bushing 10, the sleeve 30 may have a relatively short length, because no liner is required. As a result, the entire bushing 10 may have a compact construction and may be light-weight.

The present invention may not be limited to the above representative embodiment but may be modified in various ways and may have various applications as will be hereinafter described:

(A) Although the relief recess 26 having a substantially right angled triangular cross section is formed in the collar 20 in the representative embodiment, it is only necessary for the relief recess 26 that the relief recess 26 is concave in the collar 20 from a part of the reference surface 21. The configuration of the relief recess 26 may be changed as desired. For example, the relief recess 26 may have a square, rectangular or arc-shaped cross sectional configuration.

(B) Although the outer diameter and the inner diameter of the sleeve 30 expand and contract, respectively, as the grease pressure is applied to the hydraulic chamber 36 of the sleeve 30 in the representative embodiment, it is possible to design only that the outer diameter expands.

(C) Although the representative hydraulic clamp bushing 10 has been used for the rotary tool 40 having the saw 42 and the breaking blade 44, the representative hydraulic clamp bushing 10 can be used for any other kind of rotary tools having various saws or cutters.

(D) Although the representative hydraulic clamp bushing 10 has been used for the machine spindle 50 of the tenoner, the representative clamp bushing 10 can be used for spindles of any other kind of machine tools, e.g., moulders.

(E) Although the grease is injected into the hydraulic chamber 36 in the above representative embodiment, any other fluid, e.g. oil for actuating hydraulic cylinders, also may be used as a hydraulic medium.

## Claims

1. A hydraulic clamp bushing (10) comprising:
a collar (20);
a cylindrical sleeve (30) extending from the collar;
a hydraulic chamber (36) defined in the sleeve, wherein a hydraulic fluid having a predetermined pressure is charged into the hydraulic chamber in a state where the sleeve is inserted into an axial hole (40a) of a rotary tool (40), so that an outer periphery (30a) of the sleeve can expand to define an effective expandable region (A1) along the outer periphery, which effective expandable region is expandable coaxially in order to clamp the rotary tool against the sleeve while the rotary tool is centered relative to the sleeve, an expandable amount of the effective expandable region being greater than a first tolerable gap defined by an outer diameter of the sleeve and an inner diameter of the axial bore of the rotary tool; and
a recess (26) defined in the collar along the outer periphery of the sleeve, so that a range of the effective expandable region can be determined in response to a depth (M) of the recess in an axial direction of the sleeve (30).

2. A hydraulic clamp bushing as in claim 1, wherein the recess (26) is concave with respect to a predetermined reference surface (21) of the collar (20), so that the effective expandable region (A1) extends over a position corresponding to the reference surface.

3. A hydraulic clamp bushing as in claim 2, wherein the reference surface (21) extends substantially perpendicular to the outer periphery (30a) of the sleeve (30) and the reference surface (21) defines a contact surface with a part of the rotary tool (40).

4. A hydraulic clamp bushing as in claim 3, wherein the recess (26) has a first side extending along the outer periphery of the sleeve (30) and a second side that is inclined relative to the reference surface (21).

5. A hydraulic clamp bushing as in claim 4, wherein the recess (26) has a substantially right angled rectangular configuration in cross section in a radial direction of the sleeve (30).

6. A hydraulic clamp bushing as in any one of the preceding claims, wherein the sleeve (30) is adapted to receive a drive shaft (50) that serves as a drive source of the rotary tool (40), and an inner periphery (30a) of the sleeve can coaxially contract by such an amount that is greater than a second tolerable gap defined by an inner diameter of the sleeve and an outer diameter of the drive shaft (50) when the hydraulic fluid is charged into the hydraulic chamber in a state where the drive shaft is inserted into the sleeve.
